# FASCICULE DE BREVET EUROPEEN

(11) **EP 3 320 622 B1**
(45) Date de publication et mention de la délivrance du brevet: **04.12.2019**
(21) Numéro de dépôt: 16770034.3
(22) Date de dépôt: 08.07.2016
(51) Int. Cl.: H04B 1/12, H01Q 3/26, H04B 7/185, H04K 3/00, H04B 7/08

(54) **PROCÉDÉ ET DISPOSITIF DE SUPPRESSION DE SIGNAL PARASITE DANS UN SIGNAL DE CHARGE UTILE D'UN SATELLITE**
VERFAHREN UND VORRICHTUNG ZUR UNTERDRÜCKUNG VON STÖRSIGNALEN IN EINEM SATELLITEN-NUTZLAST-SIGNAL
METHOD AND DEVICE FOR SUPPRESSING INTERFERING SIGNALS IN A SATELLITE PAYLOAD SIGNAL

(30) Priorité: 10.07.2015 FR 1556574
(43) Date de publication de la demande: 16.05.2018
(73) Titulaire: Airbus Defence and Space SAS, 31402 Toulouse Cedex 4 (FR); Centre National d'Etudes Spatiales (CNES), 75001 Paris (FR)
(72) Inventeur: JACQUEY, Nicolas, 31402 Toulouse Cedex 4 (FR); PEZET, Bernard, 31402 Toulouse Cedex 4 (FR); DEPLANCQ, Xavier, 31401 Toulouse Cedex 09 (FR)
(74) Mandataire: Ipside
(86) Numéro de dépôt international: PCT/FR2016/051758
(87) Numéro de publication internationale: WO 2017/009562

(56) Documents cités:
- EP-A2- 1 130 675
- FR-A1- 3 002 647

## Description

### DOMAINE TECHNIQUE

La présente invention concerne un procédé et un dispositif de suppression d'un signal parasite reçu dans un signal de charge utile fourni par une antenne de réception d'une charge utile d'un satellite, notamment un satellite de télécommunications.

### ÉTAT DE LA TECHNIQUE

De manière conventionnelle, un satellite de télécommunications comporte une charge utile équipée d'une antenne de réception adaptée à recevoir des signaux utiles émis par des émetteurs terrestres, pour les retransmettre à destination d'autres récepteurs terrestres.

Il n'est pas rare qu'un satellite de télécommunications reçoive, outre des signaux utiles, un ou plusieurs signaux parasites qui perturbent la réception desdits signaux utiles et peuvent conduire à une dégradation des services offerts par le satellite de télécommunications.

Par exemple, un signal parasite peut correspondre à un signal émis par un brouilleur intentionnel. Le signal parasite peut également correspondre à un signal émis par un interféreur non intentionnel, par exemple un émetteur terrestre d'un système de télécommunications terrestres utilisant les mêmes bandes fréquentielles que le satellite de télécommunications, ou un émetteur terrestre mal pointé d'un système de télécommunications par satellite voisin.

Afin de pouvoir atténuer ou supprimer un signal parasite reçu, il peut être utile de connaître la position de l'émetteur (brouilleur ou interféreur) à l'origine de ce signal parasite. Une fois cette position connue, il est par exemple possible d'intervenir sur site afin d'interrompre l'émission du signal parasite. Toutefois, il n'est pas toujours possible de forcer l'interruption de l'émission du signal parasite, en particulier dans le cas d'un brouilleur intentionnel situé dans une zone géographique dans laquelle il n'est pas possible d'intervenir.

En alternative ou en complément, dans le cas d'une antenne de réception dont le diagramme de rayonnement est modifiable (par exemple dans le cas d'une antenne de réception formée par un réseau d'antennes de réception élémentaires), ledit diagramme de rayonnement peut être modifié de sorte à atténuer fortement tous les signaux reçus dans la direction d'arrivée du signal parasite.

Toutefois, les performances d'une telle solution dépendent de la précision de l'estimation de la direction d'arrivée du signal parasite. En outre, une telle solution implique que les signaux utiles, reçus avec sensiblement la même direction d'arrivée que le signal parasite, sont également fortement atténués. Enfin, pour pouvoir atténuer de manière spatialement sélective la direction d'arrivée du signal parasite, il est nécessaire d'avoir recours à des équipements qui sont à la fois onéreux et lourds.

EP 1130675 A1 et FR 3002647 A1 divulguent des systèmes de communication satellitaires utilisant des antennes auxiliaires pour supprimer ou localiser des brouilleurs, respectivement.

### EXPOSÉ DE L'INVENTION

La présente invention a pour objectif de remédier à tout ou partie des limitations des solutions de l'art antérieur, notamment celles exposées ci-avant, en proposant une solution qui permette de supprimer un signal parasite de manière à la fois performante, simple et peu onéreuse.

A cet effet, et selon un premier aspect, l'invention concerne un procédé de suppression d'un signal parasite dans un signal de charge utile fourni par une antenne de réception d'une charge utile d'un satellite. Le satellite comportant en outre un réseau d'antennes de mesure fournissant des signaux respectifs, dits « signaux de mesure », ledit procédé de suppression comporte :
- la combinaison de chacun des signaux de mesure avec le signal de charge utile,
- la détermination, en fonction des signaux obtenus par combinaison de chacun des signaux de mesure avec le signal de charge utile, de coefficients de pondération desdits signaux de mesure, dits « coefficients de référence », pour la formation d'un faisceau dirigé vers un émetteur du signal parasite, dit « faisceau de référence »,
- la formation du faisceau de référence par combinaison des signaux de mesure au moyen des coefficients de référence,
- la détermination, en fonction du signal de charge utile et du faisceau de référence, de coefficients de pondération dudit signal de charge utile et dudit faisceau de référence, dits « coefficients d'antibrouillage », pour la formation d'un faisceau dans lequel le signal parasite a été supprimé, dit « faisceau antibrouillé »,
- la formation du faisceau antibrouillé par combinaison du signal de charge utile et du faisceau de référence au moyen des coefficients d'antibrouillage.

Le signal de charge utile correspond au signal fourni par l'antenne de réception de la charge utile du satellite. Une telle antenne de réception présente généralement un gain maximal relativement important, de sorte que le rapport signal sur bruit du signal parasite est relativement important dans le signal de charge utile.

Par conséquent, en combinant le signal de charge utile avec les signaux de mesure fournis par les antennes de mesure du réseau, il est possible d'améliorer le rapport signal sur bruit du signal parasite dans chacun des signaux de mesure. Ainsi, le rapport signal sur bruit du signal parasite dans chacun des signaux de mesure peut être initialement peu élevé, puisqu'il est amélioré par la combinaison avec le signal de charge utile.

Puisque l'utilisation du signal de charge utile permet d'améliorer le rapport signal sur bruit du signal parasite, les contraintes sur les antennes de mesure peuvent être relâchées. Lesdites antennes de mesure peuvent par conséquent être peu directives, et donc être peu encombrantes tout en ayant une couverture géographique importante.

Grâce à cette amélioration du rapport signal sur bruit du signal parasite dans chacun des signaux de mesure, obtenue par combinaison avec le signal de charge utile, il est en outre possible d'estimer la direction d'arrivée du signal parasite avec une meilleure précision. Par conséquent, il est possible de calculer avec une meilleure précision les coefficients de référence qui permettent de former au moyen du réseau d'antennes de mesure le faisceau de référence dirigé vers l'émetteur du signal parasite.

Ainsi, le faisceau de référence vise à récupérer principalement le signal parasite, c'est-à-dire à augmenter le rapport signal sur bruit plus interférence SNIR (le ou les signaux utiles étant alors considérés comme des interférences) du signal parasite. Le faisceau de référence ne vise donc pas, comme c'est le cas dans les solutions de l'art antérieur, à atténuer fortement le signal parasite de manière spatialement sélective, de sorte que les contraintes sur les antennes de mesure peuvent être relâchées.

Du fait de la formation du faisceau de référence, il est alors possible de supprimer le signal parasite du signal de charge utile, en tout ou partie, en limitant l'impact sur le ou les signaux utiles inclus dans le signal de charge utile. Cette suppression est réalisée par une combinaison adaptée du signal de charge utile et du faisceau de référence, qui conduit à la formation du faisceau antibrouillé dans lequel le signal parasite a été supprimé.

Dans des modes particuliers de mise en œuvre, le procédé de suppression peut comporter en outre l'une ou plusieurs des caractéristiques suivantes, prises isolément ou selon toutes les combinaisons techniquement possibles.

Dans des modes particuliers de mise en œuvre, la combinaison de chacun des signaux de mesure avec le signal de charge utile comporte la corrélation dudit signal de charge utile avec chacun desdits signaux de mesure.

Dans des modes particuliers de mise en œuvre, la corrélation est calculée dans le domaine fréquentiel.

Dans des modes particuliers de mise en œuvre, les coefficients de référence sont calculés au sol et appliqués par le satellite pour former le faisceau de référence.

Dans des modes particuliers de mise en œuvre, la détermination des coefficients de référence comporte le calcul d'une matrice de covariance des signaux obtenus par combinaison de chacun des signaux de mesure avec le signal de charge utile, dite « matrice de covariance de référence », et également le calcul des coefficients de référence en fonction de la matrice de covariance de référence.

Dans des modes particuliers de mise en œuvre, la détermination des coefficients d'antibrouillage comporte le calcul d'une matrice de covariance du signal de charge utile et du faisceau de référence, dite « matrice de covariance d'antibrouillage », et également le calcul des coefficients d'antibrouillage en fonction de la matrice de covariance d'antibrouillage.

Dans des modes particuliers de mise en œuvre, le signal de charge utile et les signaux de mesure étant décomposés en différents canaux fréquentiels, le procédé de suppression comporte :
- la détermination de coefficients de référence pour chaque canal,
- la formation, pour chaque canal, d'un faisceau de référence au moyen des coefficients de référence déterminés pour ledit canal,
- la détermination de coefficients d'antibrouillage pour chaque canal,
- la formation, pour chaque canal, d'un faisceau antibrouillé au moyen des coefficients d'antibrouillage déterminés pour ledit canal.

Selon un second aspect, la présente invention concerne une charge utile d'un satellite comportant une antenne de réception adaptée à fournir un signal de charge utile, et un dispositif de suppression d'un signal parasite dans le signal de charge utile comportant :
- un réseau d'antennes de mesure adaptées à fournir des signaux respectifs, dits « signaux de mesure »,
- un module de combinaison configuré pour combiner chacun des signaux de mesure avec le signal de charge utile,
- un premier module de formation de faisceau configuré pour former un faisceau dirigé vers un émetteur du signal parasite, dit « faisceau de référence », par combinaison des signaux de mesure au moyen de coefficients de pondération, dits « coefficients de pondération de référence », déterminés en fonction des signaux fournis par le module de combinaison,
- un second module de formation de faisceau configuré pour former un faisceau dans lequel le signal parasite a été supprimé, dit « faisceau antibrouillé », par combinaison du signal de charge utile et du faisceau de référence au moyen de coefficients de pondération, dits « coefficients d'antibrouillage ».

Dans des modes particuliers de réalisation, la charge utile peut comporter en outre l'une ou plusieurs des caractéristiques suivantes, prises isolément ou selon toutes les combinaisons techniquement possibles.

Dans des modes particuliers de réalisation, le dispositif de suppression comporte un module de commutation adapté à fournir sur une sortie soit le signal de charge utile fourni par l'antenne de réception, soit le faisceau antibrouillé fourni par le second module de formation de faisceau.

Dans des modes particuliers de réalisation, le module de combinaison est configuré pour corréler le signal de charge utile avec chacun des signaux de mesure.

Dans des modes particuliers de réalisation, le dispositif de suppression comporte :
- des moyens d'émission, à destination d'une station sol, des signaux fournis par le module de combinaison et/ou de données calculées à partir desdits signaux fournis par ledit module de combinaison,
- des moyens de réception des coefficients de référence calculés au sol en fonction desdits signaux fournis par le module de combinaison et/ou en fonction desdites données.

Dans des modes particuliers de réalisation, le dispositif de suppression comporte un module de calcul configuré pour déterminer les coefficients de référence en fonction des signaux fournis par le module de combinaison.

Dans des modes particuliers de réalisation, le dispositif de suppression comporte un module de calcul configuré pour déterminer les coefficients d'antibrouillage en fonction du signal de charge utile et du faisceau de référence.

Dans des modes particuliers de réalisation, l'antenne de réception est de gain maximal supérieur aux gains maximaux respectifs des antennes de mesure.

Selon un troisième aspect, la présente invention concerne un satellite comportant une charge utile selon l'un quelconque des modes de réalisation de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système de télécommunications par satellite,
- Figure 2 : une représentation schématique d'un exemple de réalisation d'une charge utile d'un satellite comportant un dispositif de suppression de signal parasite,

- Figure 3 : un diagramme représentant les principales étapes d'un procédé de suppression de signal parasite,
- Figure 4 : une représentation schématique d'une variante préférée de réalisation du dispositif de suppression de la figure 2,
- Figure 5 : un diagramme représentant un mode préféré de mise en œuvre d'un procédé de suppression de signal parasite.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

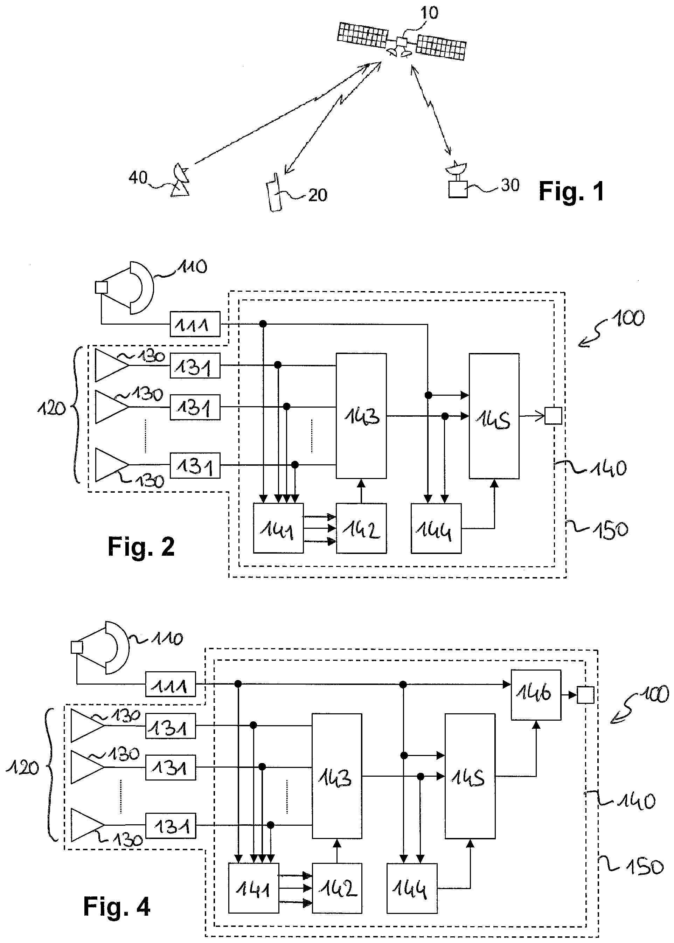

La figure 1 représente schématiquement un système satellitaire comportant un satellite 10 en orbite terrestre (GEO, LEO, MEO, etc.).

Tel qu'illustré par la figure 1, le satellite 10 reçoit un signal utile émis par un terminal terrestre 20, et le retransmet à destination d'une station sol 30 ou d'un autre terminal terrestre. De manière analogue, le satellite 10 peut recevoir un signal utile de la station sol 30, et le retransmettre à destination d'un terminal terrestre 20.

Dans l'exemple illustré par la figure 1, le satellite 10 reçoit également un signal parasite émis par un émetteur parasite 40, par exemple un brouilleur intentionnel ou un interféreur non intentionnel. Le signal parasite perturbe la réception du signal utile, et la présente invention concerne la suppression dudit signal parasite dans les signaux reçus par le satellite 10.

La figure 2 représente schématiquement un exemple de réalisation d'une charge utile 100 du satellite 10. Pour des raisons de clarté, la figure 2 représente uniquement les principaux éléments de la charge utile 100 relatifs à la suppression du signal parasite, de sorte que la charge utile 100 peut également comporter d'autres éléments non représentés sur la figure 2.

Tel qu'illustré par la figure 2, la charge utile 100 comporte une antenne de réception 110 desservant une zone géographique prédéfinie à la surface de la Terre, dite « zone de service ».

L'antenne de réception 110 est par exemple du type comportant une source et un réflecteur, ou tout autre type d'antenne adaptée. Rien n'exclut également, suivant d'autres exemples, d'avoir une antenne de réception 110 formée par un réseau d'antennes de réception élémentaires.

L'antenne de réception 110 est adaptée à fournir un signal de charge utile comportant le signal utile reçu du terminal terrestre 20, se trouvant dans la zone de service, ainsi que le signal parasite reçu de l'émetteur parasite 40, qui peut se trouver en dehors de ladite zone de service. Tel qu'illustré par la figure 2, l'antenne de réception 110 est en outre reliée, de manière conventionnelle, à une chaîne de réception analogique 111.

La charge utile 100 du satellite 10 comporte également un dispositif 150 de suppression de signal parasite, dont la figure 2 représente schématiquement un mode particulier de réalisation.

Le dispositif 150 de suppression comporte tout d'abord un réseau 120 de N_{R} antennes de mesure 130 adaptées à fournir des signaux respectifs, dits « signaux de mesure ». Les antennes de mesure 130 sont de préférence orientées de sorte à desservir la zone service de l'antenne de réception 110.

Toutefois, la zone géographique desservie par chaque antenne de mesure 130 est de préférence plus grande que la zone de service, afin de couvrir une surface plus grande de localisations possibles pour un émetteur parasite 40. En d'autres termes, les antennes de mesure 130 sont, dans des modes préférés de réalisation, moins directives que l'antenne de réception 110, de sorte que le gain maximal de ladite antenne de réception 110 est supérieur aux gains maximaux respectifs des antennes de mesure 130.

Dans la suite de la description, on se place de manière non limitative dans le cas où les N_{R} antennes de mesure 130 du réseau 120 sont des antennes cornets. Rien n'exclut cependant de considérer, dans d'autres modes de réalisation, d'autres types d'antennes de mesure 130.

Le nombre N_{R} d'antennes de mesure 130 du réseau est égal ou supérieur à deux. Toutefois, dans le cas où ledit réseau 120 comporte uniquement deux antennes de mesure 130, il n'est possible d'estimer qu'une direction d'arrivée 2D du signal parasite, dans un plan passant par l'émetteur parasite 40 et lesdites deux antennes de mesure 130. Par conséquent, le réseau 120 comporte préférentiellement au moins trois antennes de mesure 130 non toutes alignées, afin de pouvoir estimer une direction d'arrivée 3D du signal parasite. Un nombre N_{R} d'antennes de mesure 130 compris entre 5 et 10 permet en principe d'obtenir de bonnes performances pour la localisation d'un signal parasite, mais il est néanmoins possible de considérer un nombre N_{R} d'antennes de mesure 130 supérieur à 10.

La distance entre les antennes de mesure 130 adjacentes du réseau 120 peut être la même pour chaque paire d'antennes de mesure 130 adjacentes ou, préférentiellement, ne pas être la même pour toutes les paires d'antennes de mesure 130 adjacentes du réseau 120, afin d'améliorer la levée d'ambiguïté sur la direction d'arrivée du signal parasite. Pour les mêmes raisons, dans des modes préférés de réalisation, les antennes de mesure 130 du réseau 120 ne sont pas toutes coplanaires. En d'autres termes, les centres de phases des antennes de mesure 130 ne sont pas tous dans un même plan.

Il est à noter que la précision de l'estimation de la direction d'arrivée du signal parasite augmente avec la distance entre les antennes de mesure 130 adjacentes. Dans des modes préférés de réalisation, la distance minimale entre les antennes de mesure 130 adjacentes du réseau est au moins cinq fois supérieure à la longueur d'onde maximale λ_{MAX} des signaux utiles émis par les terminaux terrestres 20, voire au moins dix fois supérieure.

La distance, entre les deux antennes de mesure 130 du réseau 120 les plus éloignées l'une de l'autre, est, dans des modes préférés de réalisation, égale ou inférieure à 50·λ_{MAX}. De telles dispositions permettent de limiter l'encombrement lié au réseau 120 d'antennes de mesure 130.

Le dispositif 150 de suppression comporte également des chaînes de réception analogique 131, considérées comme connues de l'homme de l'art, reliées respectivement aux différentes antennes de mesure 130 du réseau 120.

Le dispositif 150 de suppression comporte également un dispositif 140 de calcul relié à la sortie de la chaîne de réception analogique 111 de l'antenne de réception 110 et aux sorties des chaînes de réception analogique 131 des antennes de mesure 130 du réseau 120.

Le dispositif 140 de calcul comporte par exemple des moyens de conversion analogique/numérique du signal de charge utile fourni par l'antenne de réception 110 et des signaux de mesure fournis par les antennes de mesure 130 du réseau 120. Le dispositif 140 de calcul comporte par exemple également un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre tout ou partie des étapes d'un procédé 50 de suppression de signal parasite décrit ci-après. Dans une variante, le dispositif 140 de calcul comporte un ou des circuits logiques programmables, de type FPGA, PLD, etc., et/ou circuits intégrés spécialisés (ASIC) adaptés à mettre en œuvre tout ou partie desdites étapes du procédé 50 de suppression de signal parasite.

En d'autres termes, le dispositif 140 de calcul comporte un ensemble de moyens configurés de façon logicielle (produit programme d'ordinateur spécifique) et/ou matérielle (FPGA, PLD, ASIC, etc.) pour mettre en œuvre tout ou partie des étapes du procédé 50 de suppression de signal parasite.

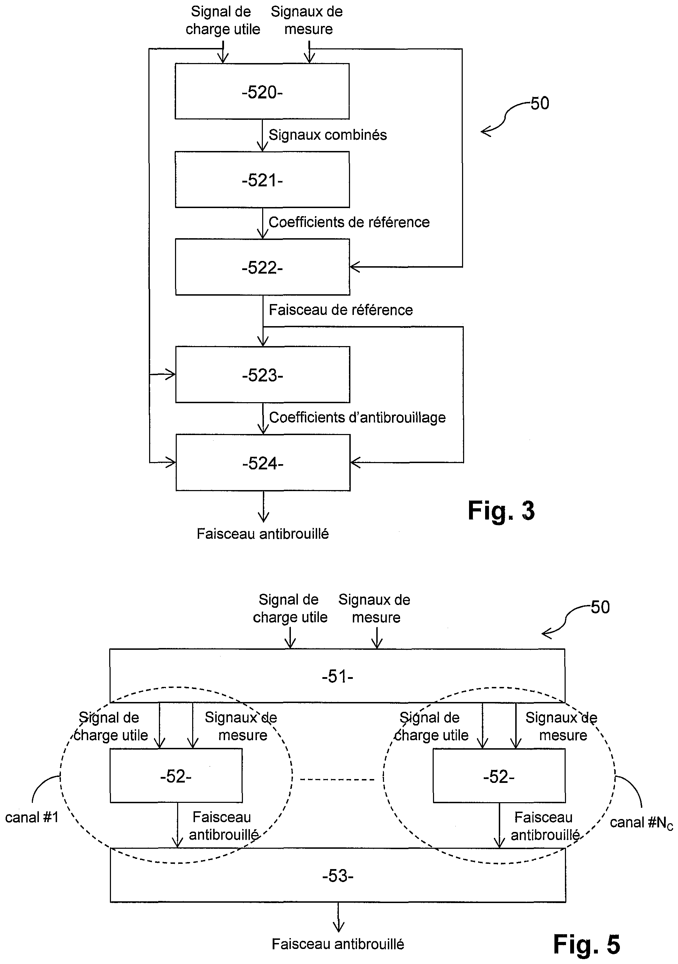

La figure 3 représente schématiquement les principales étapes d'un procédé 50 de suppression de signal parasite, lesquelles sont :
- une étape 520 de combinaison de chacun des signaux de mesure avec le signal de charge utile,
- une étape 521 de détermination, en fonction des signaux obtenus après combinaison, de coefficients de pondération des signaux de mesure, dits « coefficients de référence », pour la formation d'un faisceau dirigé vers l'émetteur parasite 40 du signal parasite, dit « faisceau de référence »,
- une étape 522 de formation du faisceau de référence par combinaison des signaux de mesure au moyen des coefficients de référence,
- une étape 523 de détermination, en fonction du signal de charge utile et du faisceau de référence, de coefficients de pondération dudit signal de charge utile et dudit faisceau de référence, dits « coefficients d'antibrouillage », pour la formation d'un faisceau dans lequel le signal parasite a été supprimé du signal de charge utile, dit « faisceau antibrouillé »,
- une étape 524 de formation du faisceau antibrouillé par combinaison du signal de charge utile et du faisceau de référence au moyen des coefficients d'antibrouillage.

Il est à noter que les différentes étapes du procédé 50 de suppression de signal parasite peuvent être exécutées dans la charge utile du satellite 10 et/ou dans une ou plusieurs stations sol 30. Ainsi, différentes répartitions des étapes du procédé 50 de suppression entre le satellite 10 et le sol sont possibles, et le choix d'une répartition particulière ne constitue qu'une variante d'implémentation de l'invention.

Dans la suite de la description, on se place dans un premier temps dans le cas, illustré de manière non limitative par la figure 2, où toutes les étapes du procédé 50 de suppression sont exécutées au niveau du satellite 10.

Tel qu'illustré par la figure 2, le dispositif 140 de calcul comporte un ensemble de modules fonctionnels pour la mise en œuvre des différentes étapes du procédé 50 de suppression de signal parasite :
- un module de combinaison 141 configuré pour combiner les signaux de mesure avec le signal de charge utile,
- un premier module de calcul 142 configuré pour déterminer les coefficients de référence,
- un premier module de formation 143 de faisceau, pour la formation du faisceau de référence,
- un second module de calcul 144 configuré pour déterminer les coefficients d'antibrouillage,
- un second module de formation 145 de faisceau, pour la formation du faisceau d'antibrouillage.

Au cours de l'étape 520 de combinaison, le module de combinaison 141 combine le signal de charge utile avec chacun des signaux de mesure.

La combinaison permet d'introduire un gain de traitement qui améliore le rapport signal sur bruit du signal parasite (et du ou des signaux utiles). Dans des modes préférés de mise en œuvre, la combinaison correspond à une corrélation du signal de charge utile avec chacun des signaux de mesure. La corrélation est par exemple calculée dans le domaine temporel, ou bien dans le domaine fréquentiel, après avoir calculé des spectres fréquentiels du signal de charge utile et des signaux de mesure, par exemple au moyen d'une transformée de Fourier rapide (« Fast Fourier Transform » ou FFT dans la littérature anglo-saxonne).

Ensuite, le premier module de calcul 142 détermine les coefficients de référence en fonction des signaux fournis par le module de combinaison 141.

Les coefficients de référence visent à former un faisceau de référence dirigé vers l'émetteur parasite 40. Par « dirigé vers l'émetteur parasite », on entend de manière générale que le faisceau de référence vise à fournir un signal dans lequel le rapport signal sur bruit plus interférence SNIR (le ou les signaux utiles étant considérés comme des interférences) du signal parasite est amélioré par rapport à celui dans chacun des signaux de mesure. En d'autres termes, le faisceau de référence vise à favoriser la réception du signal parasite en atténuant le ou les signaux utiles par rapport au signal parasite.

Le calcul des coefficients de référence, permettant de former un faisceau de référence favorisant la réception du signal parasite, peut mettre en œuvre toute méthode adaptée connue de l'homme de l'art. Les principales méthodes connues effectuent généralement une analyse statistique des signaux considérés, ici le signal de charge utile et les signaux de mesure. Par exemple, il est possible d'estimer une matrice de covariance dudit signal de charge utile et desdits signaux de mesure, dite « matrice de covariance de référence », et de déterminer les coefficients de référence en fonction de la matrice inverse de ladite matrice de covariance de référence. Cependant, d'autres méthodes existent pour déterminer des coefficients de référence adaptés, qui peuvent également être utilisées dans le cadre de l'invention.

Le calcul des coefficients de référence peut comporter, par exemple, l'estimation des directions d'arrivée des différents signaux (signal utile et signal parasite) à partir de la matrice de covariance de référence, selon toute méthode connue de l'homme de l'art. On peut citer, à titre d'exemples non limitatifs, les méthodes suivantes :
- MUSIC (voir par exemple : « Multiple Emitter Location and Signal Parameter Estimation », R. O. Schmidt, IEEE Transactions on Antennas and Propagation, Vol. 34, N° 3, Mars 1986)
- ESPRIT (voir par exemple « ESPRIT : Estimation of Signal Parameters via Rotational Invariance Techniques », R. Roy et al., IEEE Transactions on Acoustics, Speech and Signal Processing, Vol. 37, N° 7, Juillet 1989).

A partir des estimations des différentes directions d'arrivée, il est possible de déterminer des coefficients de référence permettant de former un faisceau de référence favorisant la réception du signal parasite. L'atténuation du ou des signaux utiles par rapport au signal parasite peut être plus ou moins importante. Si les conditions le permettent, par exemple si le nombre N_{R} d'antennes de mesure 130 est supérieur au nombre total de signaux reçus, par exemple supérieur à deux dans le cas d'un seul signal parasite et d'un seul signal utile, alors il est possible de former un faisceau de référence présentant théoriquement un gain multiplicatif sensiblement nul dans la direction d'arrivée du signal utile, de sorte à maximiser le SNIR du signal parasite.

En général, le ou les signaux utiles sont émis à partir de la zone de service, qui est connue a priori. Il n'est donc pas forcément nécessaire d'estimer le nombre et les directions d'arrivée des signaux utiles. En effet, le faisceau de référence peut être optimisé pour la réception du signal parasite tout en atténuant globalement les signaux utiles reçus de la zone de service.

Une fois les coefficients de référence déterminés, le premier module de formation 143 de faisceau forme le faisceau de référence en combinant les signaux de mesure au moyen desdits coefficients de référence.

Ensuite, le second module de calcul 144 détermine les coefficients d'antibrouillage en fonction du signal de charge utile et du faisceau de référence. Les coefficients d'antibrouillage visent à former un faisceau antibrouillé dans lequel le signal parasite a été supprimé, en tout ou partie.

Le calcul des coefficients d'antibrouillage, permettant de former le faisceau antibrouillé, peut mettre en œuvre toute méthode adaptée connue de l'homme de l'art. Les principales méthodes connues effectuent généralement une analyse statistique des signaux considérés, ici le signal de charge utile et le faisceau de référence. Par exemple, il est possible d'estimer une matrice de covariance dudit signal de charge utile et dudit faisceau de référence, dite « matrice de covariance d'antibrouillage », et de déterminer les coefficients d'antibrouillage en fonction de la matrice inverse de ladite matrice de covariance d'antibrouillage. Cependant, d'autres méthodes existent pour déterminer des coefficients d'antibrouillage adaptés, qui peuvent également être utilisées dans le cadre de l'invention.

De manière générale, il est avantageux d'estimer les coefficients d'antibrouillage à partir du faisceau de référence. En effet, le SNIR du signal parasite est meilleur dans le faisceau de référence que dans les signaux de mesure, de sorte que les coefficients d'antibrouillage permettant de supprimer le signal parasite sont estimés avec une plus grande précision. En outre, la matrice de covariance d'antibrouillage ainsi obtenue est généralement bien conditionnée et facile à inverser.

Une fois les coefficients d'antibrouillage déterminés, le second module de formation 145 de faisceau forme le faisceau antibrouillé en combinant le signal de charge utile et le faisceau de référence, fourni par le premier module de formation 143 de faisceau, au moyen desdits coefficients d'antibrouillage.

La figure 4 représente schématiquement un mode préféré de réalisation, dans lequel le dispositif 150 de suppression comporte, outre les éléments décrits en référence à la figure 2, un module de commutation 146 adapté à fournir sur une sortie soit le signal de charge utile fourni par l'antenne de réception 110, soit le faisceau antibrouillé fourni par le second module de formation 145 de faisceau. De telles dispositions permettent par conséquent d'activer ou non la suppression du signal parasite suivant qu'un signal parasite a été détecté ou non. Ainsi, lorsqu'aucun signal parasite n'a été détecté, le module de commutation 146 est commandé pour fournir en sortie le signal de charge utile. A contrario, lorsqu'un signal parasite a été détecté, le module de commutation 146 est commandé pour fournir en sortie le faisceau antibrouillé dans lequel le signal parasite a été supprimé, en tout ou partie.

La figure 5 représente schématiquement un mode préféré de mise en œuvre du procédé 50 de suppression, dans lequel le signal de charge utile et les signaux de mesure sont décomposés en canaux fréquentiels. Les canaux correspondent par exemple à des sous-bandes fréquentielles adjacentes à l'intérieur d'une bande fréquentielle prédéfinie des signaux utiles, dite « bande de multiplexage BM ». En effet, de meilleures performances en termes de suppression du signal parasite peuvent être obtenues en se plaçant au niveau canal, c'est-à-dire au niveau de chaque sous-bande fréquentielle, plutôt qu'en traitant de manière globale la bande de multiplexage BM.

Tel qu'illustré par la figure 5, le procédé 50 de suppression comporte tout d'abord une étape 51 de démultiplexage des canaux du signal de charge utile et des signaux de mesure.

L'étape 51 de démultiplexage vise donc à séparer les différents canaux de la bande de multiplexage BM, afin de pouvoir former un faisceau antibrouillé pour chaque canal de ladite bande de multiplexage BM.

La séparation des différents canaux est de préférence effectuée dans le domaine fréquentiel, en calculant, par exemple au moyen d'une FFT, un spectre fréquentiel du signal de charge utile et des spectres fréquentiels des différents signaux de mesure sur la bande de multiplexage BM. Rien n'exclut cependant d'effectuer la séparation des différents canaux dans le domaine temporel, par exemple au moyen de filtres temporels passe-bande associés respectivement aux différents canaux.

Dans l'exemple illustré par la figure 5, le nombre de canaux est égal à N_{C}, de sorte que, à l'issue de l'étape 51 de démultiplexage, on dispose de N_{C} canaux pour le signal de charge utile et de N_{C} canaux par signal de mesure.

Le procédé 50 de suppression comporte ensuite, dans le mode préféré de mise en œuvre illustré par la figure 5, une étape 52 de suppression du signal parasite. L'étape 52 de suppression du signal parasite, qui est exécutée pour chaque canal, reprend de préférence les étapes du procédé 50 de suppression décrites en référence à la figure 3. Toutefois, l'étape 520 de combinaison peut être exécutée au cours de l'étape 52 de suppression du signal parasite, canal par canal, ou avant l'étape 51 de démultiplexage.

Par conséquent, l'étape 52 de suppression, qui est exécutée pour chaque canal, comporte notamment :
- la détermination 521 de coefficients de référence pour le canal considéré, en fonction des signaux obtenus après combinaison pour ledit canal considéré,
- la formation 522 d'un faisceau de référence pour le canal considéré, par combinaison des signaux de mesure dudit canal considéré au moyen des coefficients de référence déterminés pour ledit canal considéré,
- la détermination 523 de coefficients d'antibrouillage pour le canal considéré, en fonction du signal de charge utile et du faisceau de référence dudit canal considéré,
- la formation 524 d'un faisceau antibrouillé pour le canal considéré, par combinaison du signal de charge utile et du faisceau de référence dudit canal considéré au moyen des coefficients d'antibrouillage déterminés pour ledit canal considéré.

Ainsi, à l'issue des différentes étapes 52 de suppression, on dispose de N_{C} faisceaux antibrouillés, associés respectivement aux différents canaux de la bande de multiplexage BM.

Dans l'exemple illustré par la figure 5, le procédé 50 de suppression de signal parasite comporte en outre une étape 53 de multiplexage des N_{C} faisceaux antibrouillés des différents canaux, afin d'obtenir un faisceau antibrouillé sur toute la bande de multiplexage BM.

Dans le cas où l'étape 52 de suppression est exécutée dans le domaine fréquentiel, l'étape 53 de multiplexage comporte de préférence la combinaison dans le domaine fréquentiel des spectres fréquentiels respectifs desdits N_{C} faisceaux antibrouillés associés aux différents canaux, et le calcul d'une représentation temporelle du résultat de ladite combinaison, par exemple par transformée de Fourier inverse rapide (« Inverse Fast Fourier Transform » ou IFFT dans la littérature anglo-saxonne).

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant que toutes les étapes du procédé 50 de suppression étaient exécutées par le dispositif 150 de suppression embarqué dans le satellite 10. Rien n'exclut cependant, suivant d'autres exemples, d'avoir tout ou partie desdites étapes exécutées au sol par une ou plusieurs stations sol.

Suivant un premier exemple, toutes les étapes illustrées par la figure 3 sont exécutées au sol, par une ou plusieurs stations sol 30. Le cas échéant, le signal de charge utile et les signaux de mesure doivent être transmis à une station sol 30 par le satellite 10, et les modules fonctionnels décrits ci-avant en référence à la figure 2 sont intégrés dans une ou plusieurs stations sol.

Suivant un autre exemple, toutes les étapes illustrées par la figure 3, à l'exception de l'étape 521 de détermination des coefficients de référence, sont entièrement exécutées au niveau du satellite 10. L'étape 521 de détermination des coefficients de référence, dont la complexité augmente avec le nombre N_{R} d'antennes de mesure 130 du réseau 120, est au moins partiellement exécutée au sol tandis que les coefficients de référence sont appliqués par le satellite 10. Le cas échéant, le dispositif 150 de suppression embarqué dans le satellite 10 comporte par exemple :
- des moyens d'émission (non représentés sur les figures), à destination d'une station sol, des signaux fournis par le module de combinaison 141 et/ou de données calculées à partir desdits signaux fournis par ledit module de combinaison 141, telles que la matrice de covariance de référence,
- des moyens de réception (non représentés sur les figures) des coefficients de référence calculés au sol en fonction desdits signaux fournis par le module de combinaison et/ou en fonction desdites données.

En outre, l'invention a été décrite en considérant que les différentes étapes du procédé 50 de suppression étaient mises en œuvre par des modules fonctionnels d'un dispositif 140 de calcul numérique. Rien n'exclut cependant, suivant d'autres exemples d'avoir tout ou partie desdits modules fonctionnels réalisés au moyen de composants analogiques. Par exemple, le module de commutation 146 peut être réalisé au moyen d'un commutateur analogique.

En outre l'invention a été décrite en considérant la présence d'un seul signal parasite. L'invention est cependant applicable à un nombre plus important de signaux parasites. Par exemple, il est possible de former plusieurs faisceaux de référence associés respectivement aux différents signaux parasites détectés, et de former le faisceau antibrouillé à partir du signal de charge utile et desdits faisceaux de référence.

L'invention décrite ci-dessus est applicable à des signaux utiles et parasites qui peuvent avoir été émis par des terminaux situés soit au sol, soit en altitude au-dessus de la surface du sol (avion, drone, ballon, satellite). En outre, les terminaux peuvent être fixes ou mobiles (voiture, avion, drone, ballon, train, bateau, et utilisés pendant un déplacement ou entre deux déplacements, etc.). Il est en outre possible de s'adapter à des émetteurs parasites 40 en déplacement en mettant à jour de manière récurrente les coefficients de référence. L'invention décrite, du fait qu'elle permet de s'auto-adapter à différents signaux parasites, offre une solution robuste face à des scénarios de brouillage très divers : brouilleurs isolés ou multiples (groupés ou dispersés, fixes ou mobiles) et ayant des caractéristiques de brouillage variées (fixe ou variable en fréquence et en temps).

L'invention décrite ci-dessus est utilisable dans n'importe quelle bande de fréquences, on peut citer à titre d'exemples les bandes de fréquences classiquement utilisées par les systèmes de télécommunications par satellite, telles que : C, L, S, X, Ku, Ka, Q/V.

L'invention décrite ci-dessus est efficace pour protéger des interférences ou des brouillages des systèmes de télécommunications par satellite fonctionnant dans différentes bandes de fréquences et effectuant des missions civiles ou militaires ou une combinaison des deux. Les communications à protéger peuvent porter sur n'importe quel type de contenu numérique ou analogique susceptible d'être échangé avec un terminal satellite (échange de documents, conversations téléphoniques, données de fax, données de consultation de pages Web, streaming audio ou vidéo, etc.).

L'utilisation de l'invention peut également permettre de :
- protéger des échanges de données inter-satellite d'interférences ou de brouillages,
- réutiliser tout ou partie du spectre d'un autre système, tout en tolérant des interférences qu'il génère et provenant du sol,
- autoriser localement la réutilisation par un autre système (satellitaire ou non) de tout ou partie du spectre du système satellitaire considéré,
- faciliter la coordination du spectre entre systèmes proches pour éviter qu'il y ait un risque d'interférence d'un système sur l'autre.

## Revendications

1. Procédé (50) de suppression d'un signal parasite dans un signal de charge utile fourni par une antenne de réception (110) d'une charge utile d'un satellite (10), ledit satellite comportant en outre un réseau (120) d'antennes de mesure (130) adaptées à fournir des signaux respectifs, dits « signaux de mesure », **caractérisé en ce que** le procédé (50) comporte :
- la combinaison (520) de chacun des signaux de mesure avec le signal de charge utile,
- la détermination (521), en fonction des signaux obtenus par combinaison de chacun des signaux de mesure avec le signal de charge utile, de coefficients de pondération desdits signaux de mesure, dits « coefficients de référence », pour la formation d'un faisceau dirigé vers un émetteur du signal parasite, dit « faisceau de référence »,
- la formation (522) du faisceau de référence par combinaison des signaux de mesure au moyen des coefficients de référence,
- la détermination (523), en fonction du signal de charge utile et du faisceau de référence, de coefficients de pondération dudit signal de charge utile et dudit faisceau de référence, dits « coefficients d'antibrouillage », pour la formation d'un faisceau dans lequel le signal parasite a été supprimé, dit « faisceau antibrouillé »,
- la formation (524) du faisceau antibrouillé par combinaison du signal de charge utile et du faisceau de référence au moyen des coefficients d'antibrouillage.

2. Procédé (50) selon la revendication 1, dans lequel la combinaison de chacun des signaux de mesure avec le signal de charge utile comporte une corrélation dudit signal de charge utile avec chacun desdits signaux de mesure.

3. Procédé (50) selon la revendication 2, dans lequel la corrélation est calculée dans le domaine fréquentiel.

4. Procédé (50) selon l'une des revendications précédentes, dans lequel les coefficients de référence sont calculés au sol et appliqués par le satellite pour former le faisceau de référence.

5. Procédé (50) selon l'une des revendications précédentes, dans lequel la détermination des coefficients de référence comporte le calcul d'une matrice de covariance des signaux obtenus par combinaison de chacun des signaux de mesure avec le signal de charge utile, dite « matrice de covariance de référence », et le calcul des coefficients de référence en fonction de la matrice de covariance de référence.

6. Procédé (50) selon l'une des revendications précédentes, dans lequel la détermination des coefficients d'antibrouillage comporte le calcul d'une matrice de covariance du signal de charge utile et du faisceau de référence, dite « matrice de covariance d'antibrouillage », et le calcul des coefficients d'antibrouillage en fonction de la matrice de covariance d'antibrouillage.

7. Procédé (50) selon l'une des revendications précédentes, dans lequel, le signal de charge utile et les signaux de mesure étant décomposés en différents canaux fréquentiels, ledit procédé comporte :
- la détermination de coefficients de référence pour chaque canal,
- la formation, pour chaque canal, d'un faisceau de référence au moyen des coefficients de référence déterminés pour ledit canal,
- la détermination de coefficients d'antibrouillage pour chaque canal,
- la formation, pour chaque canal, d'un faisceau antibrouillé au moyen des coefficients d'antibrouillage déterminés pour ledit canal.

8. Charge utile (100) de satellite (10) comportant une antenne de réception (110) adaptée à fournir un signal de charge utile, ladite charge utile comportant un dispositif (150) de suppression d'un signal parasite dans le signal de charge utile comportant :
- un réseau (120) d'antennes de mesure (130) adaptées à fournir des signaux respectifs, dits « signaux de mesure »,
**caractérisé en ce que** le dispositif de suppression comporte en outre:
- un module de combinaison (141) configuré pour combiner chacun des signaux de mesure avec le signal de charge utile,
- un premier module de formation (143) de faisceau configuré pour former un faisceau dirigé vers un émetteur du signal parasite, dit « faisceau de référence », par combinaison des signaux de mesure au moyen de coefficients de pondération, dits « coefficients de référence », déterminés en fonction des signaux fournis par le module de combinaison,
- un second module de formation (145) de faisceau configuré pour former un faisceau dans lequel le signal parasite a été supprimé, dit « faisceau antibrouillé », par combinaison du signal de charge utile et du faisceau de référence au moyen de coefficients de pondération, dits « coefficients d'antibrouillage ».

9. Charge utile (100) selon la revendication 8, comportant un module de commutation (146) adapté à fournir sur une sortie dudit module de commutation soit le signal de charge utile fourni par l'antenne de réception (110), soit le faisceau antibrouillé fourni par le second module de formation (145) de faisceau.

10. Charge utile (100) selon l'une des revendications 8 à 9, dans lequel le module de combinaison (141) est configuré pour corréler le signal de charge utile avec chacun des signaux de mesure.

11. Charge utile (100) selon l'une des revendications 8 à 10, comportant :
- des moyens d'émission, à destination d'une station sol, des signaux fournis par le module de combinaison (141) et/ou de données calculées à partir desdits signaux fournis par ledit module de combinaison,
- des moyens de réception des coefficients de référence calculés au sol en fonction desdits signaux fournis par le module de combinaison (141) et/ou en fonction desdites données.

12. Charge utile (100) selon l'une des revendications 8 à 10, comportant un premier module de calcul (142) configuré pour déterminer les coefficients de référence en fonction des signaux fournis par le module de combinaison.

13. Charge utile (100) selon l'une des revendications 8 à 12, comportant un second module de calcul (144) configuré pour déterminer les coefficients d'antibrouillage en fonction du signal de charge utile et du faisceau de référence.

14. Charge utile (100) selon l'une des revendications 8 à 13, dans lequel l'antenne de réception (110) est de gain maximal supérieur aux gains maximaux respectifs des antennes de mesure (130).

15. Satellite (10) **caractérisé en ce qu'**il comporte une charge utile (100) selon l'une des revendications 8 à 14.

## Patentansprüche

1. Verfahren (50) zum Unterdrücken eines Störsignals in einem Nutzlastsignal, das von einer Empfangsantenne (110) einer Nutzlast eines Satelliten (10) bereitgestellt wird, wobei der Satellit weiter eine Anordnung (120) von Messantennen (130) umfasst, die dafür geeignet sind, jeweilige, als "Messsignale" bezeichnete Signale bereitzustellen, **dadurch gekennzeichnet, dass** das Verfahren (50) umfasst:
- Kombinieren (520) jedes der Messsignale mit dem Nutzlastsignal,
- Bestimmen (521), in Abhängigkeit von den durch Kombinieren jedes der Messsignale mit dem Nutzlastsignal erhaltenen Signalen, von als "Referenzkoeffizienten" bezeichneten Gewichtungskoeffizienten der Messsignale für die Bildung eines als "Referenzstrahl" bezeichneten Strahls, der auf einen Sender des Störsignals gerichtet ist,
- Bilden (522) des Referenzstrahls durch Kombinieren der Messsignale mithilfe der Referenzkoeffizienten,
- Bestimmen (523), in Abhängigkeit vom Nutzlastsignal und dem Referenzstrahl, von als "Entstörkoeffizienten" bezeichneten Gewichtungskoeffizienten des Nutzlastsignals und des Referenzstrahls für die Bildung eines als "entstörter Strahl" bezeichneten Strahls, in dem das Störsignal unterdrückt wurde,
- Bilden (524) des entstörten Strahls durch Kombinieren des Nutzlastsignals und des Referenzstrahls mithilfe der Entstörkoeffizienten.

2. Verfahren (50) nach Anspruch 1, wobei das Kombinieren jedes der Messsignale mit dem Nutzlastsignal ein Korrelieren des Nutzlastsignals mit jedem der Messsignale umfasst.

3. Verfahren (50) nach Anspruch 2, wobei die Korrelation im Frequenzbereich berechnet wird.

4. Verfahren (50) nach einem der vorstehenden Ansprüche, wobei die Referenzkoeffizienten am Boden berechnet und vom Satelliten angewendet werden, um den Referenzstrahl zu bilden.

5. Verfahren (50) nach einem der vorstehenden Ansprüche, wobei das Bestimmen der Referenzkoeffizienten das Berechnen einer als "Referenz-Kovarianzmatrix" bezeichneten Kovarianzmatrix der durch Kombinieren jedes der Messsignale mit dem Nutzlastsignal erhaltenen Signale, und das Berechnen der Referenzkoeffizienten in Abhängigkeit von der Referenz-Kovarianzmatrix umfasst.

6. Verfahren (50) nach einem der vorstehenden Ansprüche, wobei das Bestimmen der Entstörkoeffizienten das Berechnen einer als "Entstör-Kovarianzmatrix" bezeichneten Kovarianzmatrix des Nutzlastsignals und des Referenzstrahls, und das Berechnen der Entstörkoeffizienten in Abhängigkeit von der Entstör-Kovarianzmatrix umfasst.

7. Verfahren (50) nach einem der vorstehenden Ansprüche, wobei, wenn das Nutzlastsignal und die Messsignale in verschiedene Frequenzkanäle zerlegt werden, das Verfahren umfasst:
- Bestimmen von Referenzkoeffizienten für jeden Kanal,
- Bilden eines Referenzstrahls für jeden Kanal mithilfe der für den Kanal bestimmten Referenzkoeffizienten,
- Bestimmen von Entstörkoeffizienten für jeden Kanal,
- Bilden eines entstörten Strahls für jeden Kanal mithilfe der für den Kanal bestimmten Entstörkoeffizienten.

8. Nutzlast (100) eines Satelliten (10), die eine Empfangsantenne (110) umfasst, welche geeignet ist, ein Nutzlastsignal bereitzustellen, wobei die Nutzlast eine Vorrichtung (150) zum Unterdrücken eines Störsignals im Nutzlastsignal umfasst, umfassend:
- eine Anordnung (120) von Messantennen (130), die geeignet sind, jeweilige, als "Messsignale" bezeichnete Signale bereitzustellen, **dadurch gekennzeichnet, dass** die Unterdrückungsvorrichtung weiter umfasst:
- ein Kombinationsmodul (141), das dafür konfiguriert ist, jedes der Messsignale mit dem Nutzlastsignal zu kombinieren,
- ein erstes Strahlbildungsmodul (143), das dafür konfiguriert ist, einen als "Referenzstrahl" bezeichneten Strahl, der auf einen Sender des Störsignals gerichtet ist, durch Kombinieren der Messsignale mithilfe von als "Referenzkoeffizienten" bezeichneten Gewichtungskoeffizienten, die in Abhängigkeit von den vom Kombinationsmodul bereitgestellten Signalen bestimmt wurden, zu bilden,
- ein zweites Strahlbildungsmodul (145), das dafür konfiguriert ist, einen als "entstörter Strahl" bezeichneten Strahl, in dem das Störsignal unterdrückt wurde, durch Kombinieren des Nutzlastsignals und des Referenzstrahls mithilfe von als "Entstörkoeffizienten" bezeichneten Gewichtungskoeffizienten zu bilden.

9. Nutzlast (100) nach Anspruch 8, die ein Schaltmodul (146) umfasst, das geeignet ist, an einem Ausgang des Schaltmoduls entweder das von der Empfangsantenne (110) bereitgestellte Nutzlastsignal, oder den vom zweiten Strahlbildungsmodul (145) bereitgestellten entstörten Strahl bereitzustellen.

10. Nutzlast (100) nach einem der Ansprüche 8 bis 9, wobei das Kombinationsmodul (141) dafür konfiguriert ist, das Nutzlastsignal mit jedem der Messsignale zu korrelieren.

11. Nutzlast (100) nach einem der Ansprüche 8 bis 10, umfassend:
- Mittel zum Senden der vom Kombinationsmodul (141) bereitgestellten Signale und/oder von Daten, die auf Grundlage der vom Kombinationsmodul bereitgestellten Signale berechnet wurden, an eine Bodenstation,
- Mittel zum Empfangen der am Boden in Abhängigkeit von den vom Kombinationsmodul (141) bereitgestellten Signalen und/oder in Abhängigkeit von den Daten berechneten Referenzkoeffizienten.

12. Nutzlast (100) nach einem der Ansprüche 8 bis 10, die ein erstes Rechenmodul (142) umfasst, das dafür konfiguriert ist, die Referenzkoeffizienten in Abhängigkeit von den vom Kombinationsmodul bereitgestellten Signalen zu bestimmen.

13. Nutzlast (100) nach einem der Ansprüche 8 bis 12, die ein zweites Rechenmodul (144) umfasst, das dafür konfiguriert ist, die Entstörkoeffizienten in Abhängigkeit vom Nutzlastsignal und vom Referenzstrahl zu bestimmen.

14. Nutzlast (100) nach einem der Ansprüche 8 bis 13, wobei die Empfangsantenne (110) eine maximale Verstärkung aufweist, die größer ist als die jeweiligen maximalen Verstärkungen der Messantennen (130).

15. Satellit (10), **dadurch gekennzeichnet, dass** er eine Nutzlast (100) nach einem der Ansprüche 8 bis 14 umfasst.

## Claims

1. Method (50) for suppressing a spurious signal in a payload signal supplied by a receiving antenna (110) of a payload of a satellite (10), said satellite further comprising an array (120) of measurement antennas (130) suitable for supplying respective signals, referred to as "measurement signals", **characterised in that** the method (50) comprises:
- combining (520) each one of the measurement signals with the payload signal,
- determining (521), according to the signals obtained by combining each one of the measurement signals with the payload signal, coefficients for weighting said measurement signals, referred to as "reference coefficients", for the forming of a beam directed towards a transmitter of the spurious signal, referred to as "reference beam".
- forming (522) the reference beam by combining the measurement signals by means of the reference coefficients,
- determining (523), according to the payload signal and the reference beam, weighting coefficients of said payload signal and of said reference beam, referred to as "anti-jamming coefficients", for the forming of a beam in which the spurious signal has been suppressed, referred to as "anti-jammed beam",
- forming (524) of the anti-jammed beam by combining the payload signal and the reference beam by means of the anti-jamming coefficients.

2. Method (50) according to claim 1, in which the combination of each one of the measurement signals with the payload signal comprises a correlation of said payload signal with each one of said measurement signals.

3. Method (50) according to claim 2, in which the correlation is calculated in the frequency domain.

4. Method (50) according to one of the preceding claims, in which the reference coefficients are calculated on the ground and applied by the satellite in order to form the reference beam.

5. Method (50) according to one of the preceding claims, in which the determining of the reference coefficients comprises the calculating of a covariance matrix of the signals obtained by combining each one of the measurement signals with the payload signal, referred to as "reference covariance matrix", and the calculating of the reference coefficients according to the reference covariance matrix.

6. Method (50) according to one of the preceding claims, in which the determining of the anti-jamming coefficients comprises the calculation of a covariance matrix of the payload signal and of the reference beam, referred to as "anti-jamming covariance matrix", and the calculating of the anti-jamming coefficients according to the anti-jamming covariance matrix.

7. Method (50) according to one of the preceding claims, in which, the payload signal and the measurement signals being broken down into various frequency channels, said method comprises:
- determining reference coefficients for each channel,
- forming, for each channel, a reference beam by means of the reference coefficients determined for said channel,
- determining anti-jamming coefficients for each channel,
- forming, for each channel, an anti-jammed beam by means of the anti-jamming coefficients determined for said canal.

8. Satellite (10) payload (100) comprising a receiving antenna (110) suitable for supplying a payload signal, said payload comprising a device (150) for suppressing an spurious signal in the payload signal comprising:
- an array (120) of measurement antennas (130) suitable for supplying respective signals, referred to as "measurement signals",
**characterised in that** the device for suppressing further comprises:
- a module for combining (141) configured to combine each one of the measurement signals with the payload signal,
- a first beam-forming module (143) configured to form a beam directed towards a transmitter of the spurious signal, referred to as "reference beam", by combining measurement signals by means of weighing coefficients, referred to as "reference coefficients", determined according to the signals supplied by the module for combining,
- a second beam-forming module (145) configured to form a beam in which the spurious signal has been suppressed, referred to as "anti-jammed beam", by combining the payload signal and the reference beam by means of weighting coefficients, referred to as "anti-jamming coefficients".

9. Payload (100) according to claim 8, comprising a module for switching (146) suitable for providing on an output of said switching module either the payload signal supplied by the receiving antenna (110), or the anti-jammed beam supplied by the second beam-forming module (145) .

10. Payload (100) according to one of claims 8 to 9, in which the module for combining (141) is configured to correlate the payload signal with each one of the measurement signals.

11. Payload (100) according to one of claims 8 to 10, comprising:
- means for transmitting, to a ground station, signals supplied by the module for combining (141) and/or data calculated using said signals provided by said module for combining,
- means for receiving reference coefficients calculated on the ground according to said signals supplied by the module for combining (141) and/or according to said data.

12. Payload (100) according to one of claims 8 to 10, comprising a first module for calculating (142) configured to determine the reference coefficients according to the signals supplied by the module for combining.

13. Payload (100) according to one of claims 8 to 12, comprising a second module for calculating (144) configured to determine the anti-jamming coefficients according to the payload signal and the reference beam.

14. Payload (100) according to one of claims 8 to 13, in which the receiving antenna (110) is of a maximum gain greater than the respective maximum gains of the measurement antennas (130).

15. Satellite (10) **characterised in that** it comprises a payload (100) according to one of claims 8 to 14.
